Europäisches Patentamt

European Patent Office

Office européen des brevets

(11) Numéro de publication: **0 231 685 B1**

## (12) FASCICULE DE BREVET EUROPEEN

(45) Date de publication de fascicule du brevet: **26.02.92**   (51) Int. Cl.⁵: **G01N  15/08**, **E21B 49/00**

(21) Numéro de dépôt: **86402720.6**

(22) Date de dépôt: **09.12.86**

(54) **Méthode et dispositif pour évaluer les risques de colmatage d'un puits ou d'un forage traversant un réservoir poreux, notamment une formation géologique.**

(30) Priorité: **26.12.85 FR 8519374**

(43) Date de publication de la demande:
**12.08.87 Bulletin  87/33**

(45) Mention de la délivrance du brevet:
**26.02.92 Bulletin  92/09**

(84) Etats contractants désignés:
**BE DE GB IT**

(56) Documents cités:
**US-A- 3 180 133**
**US-A- 3 420 093**
**US-A- 4 253 327**
**US-A- 4 304 122**
**US-A- 4 554 822**

(73) Titulaire: **INSTITUT FRANCAIS DU PETROLE**
**4, Avenue de Bois Préau**
**F-92502 Rueil-Malmaison(FR)**

Titulaire: **BURGEAP**
**70, rue Mademoiselle**
**F-75015 Paris(FR)**

(72) Inventeur: **Bourguet, Lucien**
**7, Boulevard Anatole France**
**F-92100 Boulogne-Billancourt(FR)**
Inventeur: **Gatellier, Claude**
**8, quai de Stalingrad**
**F-92100 Boulogne(FR)**

## Description

La présente invention concerne une méthode et un dispositif pour évaluer les risques de colmatage d'un puits ou d'un forage traversant un réservoir poreux, notamment une formation géologique alimentée par une nappe aquifère et pour déterminer par avance les caractéristiques à donner aux ouvrages de production, puits ou forages, pour éviter leur colmatage.

Ces caractéristiques seront, par exemple, le diamètre du puits principal et de sa crépine, la hauteur crépinée, la position et les caractéristiques des drains radiants, le débit de pompage et la hauteur de rabattement de la nappe.

L'art antérieur peut être illustré par le document US-A-3.420.093. Ce document décrit une méthode et un appareillage pour tester la perméabilité d'un échantillon à un débit constant d'un fluide.

Une première application de l'invention réside dans un diagnostic sur la durée de vie des forages ou puits en exploitation et sur les méthodes et modalités d'exploitation aptes à la prolonger.

Une deuxième application de l'invention réside dans la proposition d'un traitement curatif d'un réservoir ou d'un ouvrage risquant d'être colmaté.

Les phénomènes de colmatage affectent de nombreux puits ou forages traversant des formations géologiques, notamment des formations géologiques granulaires.

Ces phénomènes réduisent parfois à quelques années seulement la durée d'exploitation de ces ouvrages, alors que leur amortissement financier est généralement calculé pour une durée de vingt ans.

L'incidence économique du colmatage est si grande qu'on cherche depuis de nombreuses années à découvrir des moyens de lutte pour réduire l'importance du colmatage quand il affecte les ouvrages. Cette recherche de moyens curatifs n'a pas encore abouti à des succès notables car il est souvent trop tard pour agir efficacement. C'est pourquoi il est souhaitable d'être capable de prévoir à l'avance les risques de colmatage d'un réservoir par une connaissance globale de ses propriétés et de leurs évolutions en fonction de la circulation du fluide dans le réservoir, par exemple d'une nappe aquifère. Les propriétés dont la connaissance globale est importante ne sont pas limitées aux seules propriétés du fluide qui occupe le réservoir. On connaît l'indice de colmatage que fournit l'encrassement d'une membrane d'acétate de cellulose de porosité 0,45 après 15 minutes de filtration de l'eau prélevée dans un aquifère. Or cet indice ne tient pas compte de la formation géologique que l'expérimentation n'a pas pu mettre en jeu. L'absence du milieu poreux, dans cette détermination, empêche de simuler correctement la physicochimie des phénomènes interfaciaux, tout comme elle ne permet pas de reproduire les développements de microorganismes dans les pores et les canalicules du milieu.

A titre préventif, il convient de déterminer la vitesse de circulation du fluide au pompage ou à l'injection, à ne pas dépasser pour éviter un colmatage. La méthode selon l'invention permet cette détermination sur le site lui-même par l'alimentation d'un modèle physique constitué de plusieurs éprouvettes percolées à des vitesses différentes par le fluide.

D'une manière plus particulière, l'invention fournit une méthode pour évaluer les risques de colmatage d'un puits ou d'un forage traversant un réservoir poreux, notamment une formation géologique, dans lequel on injecte ou on pompe un fluide, caractérisée en ce qu'on fait s'écouler des débits contrôlés différents dudit fluide à travers une pluralité d'échantillons représentatifs du réservoir poreux qui sont alimentés en parallèle et dont on maintient la température sensiblement constante.

Suivant un mode particulier de réalisation, on fait s'écouler le fluide à des vitesses différentes à travers les échantillons alimentés en parallèle.

Il sera avantageux d'assurer des différences de pression contrôlées entre l'entrée et la sortie de chacun des échantillons alimentés en parallèle.

Le milieu poreux des éprouvettes peut être constitué par du sable compacté de granulométrie connue ou bien par une carotte prélevée dans le réservoir en exploitation.

Suivant un mode particulier de mise en oeuvre, le modèle physique, objet de l'invention, est constitué de plusieurs éprouvettes identiques en acier inoxydable à l'intérieur desquelles on a placé des carottes prélevées dans le sens de l'écoulement naturel de l'aquifère et qu'on alimente par l'eau prélevée dans l'aquifère lui-même par une pompe.

Il est important selon la présente invention d'utiliser plusieurs éprouvettes soumises à des conditions d'écoulement différentes.

L'invention fournit également un dispositif qui est notamment caractérisé par le positionnement d'au moins un échantillon représentatif du réservoir poreux dans un porte-échantillon en travers duquel on fait circuler le fluide concerné par l'opération projetée de pompage ou d'injection.

L'invention fournit plus particulièrement un dispositif pour évaluer les risques de colmatage d'un puits ou d'un forage traversant une formation, notamment une formation géologique et parcouru par un fluide, par l'intermédiaire de moyens pour suivre l'évolution de la perméabilité en fonction du temps caractérisé en ce qu'il comporte une pluralité d'éprouvette adaptées à contenir des échantillons représentatifs de la formation, des moyens pour maintenir sensiblement à la même température l'ensemble desdites éprouvettes, des moyens pour alimenter en parallèle ces éprouvettes avec des débits contrôlés dudit fluide.

Selon un mode particulier de réalisation, le dispositif est caractérisé en ce que l'une au moins desdites éprouvettes est constituée sous la forme d'un porte-échantillon comportant une gaine souple, étanche fermée aux deux extrémités et permettant de placer l'échantillon dans les conditions de pression qui règnent dans son gite naturel.

Des exemples de mise en oeuvre de l'invention sont décrits ci-après en se référant aux dessins annexés parmi lesquels :

- la figure 1 représente un type d'éprouvette ou porte-échantillon utilisable,
- la figure 2 illustre un mode de prélèvement d'échantillons du réservoir poreux à étudier,
- la figure 3 montre schématiquement un dispositif selon l'invention, et,
- la figure 4 représente un mode avantageux de réalisation d'un porte-échantillon reproduisant sensiblement les conditions de pression de fond.

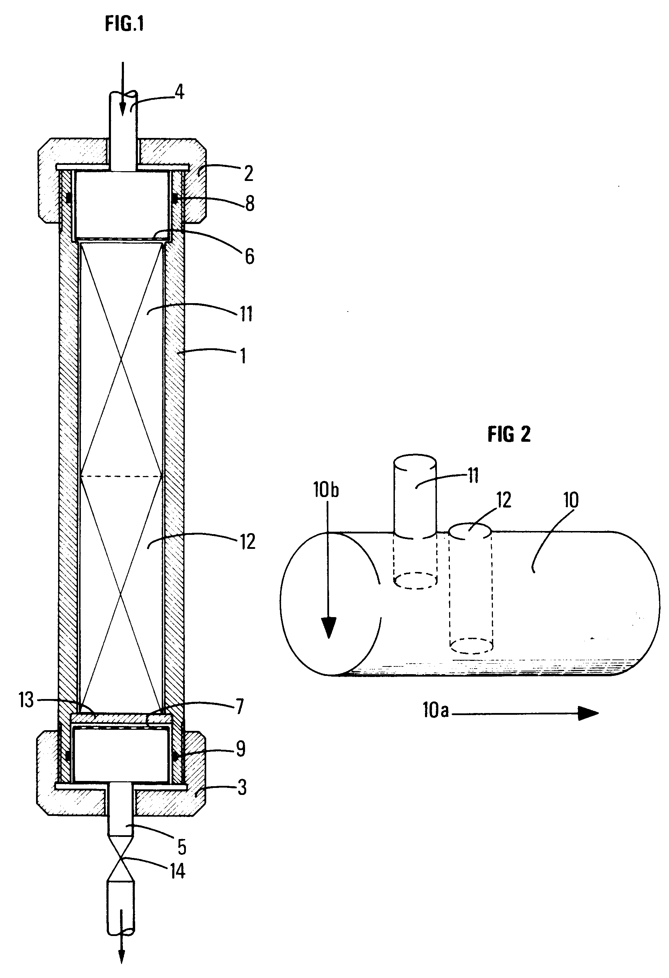

La figure 1 montre, à titre d'exemple, un mode de réalisation d'une éprouvette adaptée à contenir des échantillons du réservoir poreux étudié, un réservoir aquifère par exemple.

Cette éprouvette comprend un tube 1 pouvant être par exemple réalisé en acier inoxydable.

Aux extrémités de ce tube peuvent être vissés des obturateurs 2 et 3 qui présentent des orifices pour le passage de conduits d'entrée 4 et de sortie 5 respectivement à travers lesquels peut s'écouler le fluide traversant l'échantillon.

Les extrémités des conduits 4 et 5 ont une section élargie pour recevoir des plaques perforées 6 et 7. Des joints toriques 8 et 9 assurent l'étanchéité au contact de la paroi interne du tube 1.

Selon le mode de mise en oeuvre de l'invention illustré par les figures 1 et 2, deux échantillons de la formation à étudier sont prélevés sur une carotte 10 extraite de la formation.

Ces échantillons sont extraits de la formation géologique au moyen de deux tubes carottiers 11 et 12 (Fig. 2) qui sont adaptés à être logés l'un à la suite et au-dessous de l'autre à l'intérieur du tube 1, de manière à être parcourus en série par l'écoulement de fluide introduit par le conduit 4. Un disque en matériau poreux 13 peut être éventuellement interposé entre le tube carottier 12 et la plaque perforée 7. Sur la figure 2, la flèche 10a indique le sens du carottage effectué sur la formation. La flèche 10b indique le sens de circulation du fluide dans la formation géologique.

Sur le conduit de sortie 5 est disposé un robinet 14 permettant de régler le débit traversant les échantillons de la formation étudiée. Il serait, bien entendu, possible de disposer dans le tube 1 un seul tube carottier, ou plus de deux tubes carottiers en série.

Il serait également possible de disposer dans le tube 1 plusieurs tubes carottiers prélevés dans des sites différents d'un même réservoir poreux. Par sites différents, on entend ici des positions différemment éloignées du point de pompage ou d'injection.

La figure représente schématiquement un dispositif selon l'invention dans lequel une pluralité d'éprouvettes telles que celles illustrées par la figure 1 sont placées dans des enceintes thermostatiques 15 et 16 (la réalisation de telles enceintes est à la portée des spécialistes et ne sera donc pas décrite ici en détail). Les enceintes qui peuvent être en nombre quelconque pourront, par exemple, contenir un bain liquide dans lequel est placé un agitateur entraîné en continu ou périodiquement par un moteur électrique, la température de ce bain étant maintenue sensiblement constante par une résistance de chauffage dont l'alimentation électrique est commandée par un détecteur de la température du bain.

Les différentes éprouvettes peuvent être alimentées en parallèle à partir d'une source 17 avec des débits contrôlés par les robinets 14.

L'alimentation par la source 17 en provenance de l'aquifère par exemple, peut être coupée par une vanne 18 pour laisser place à une alimentation par une autre source 19 isolée du circuit par une vanne 20 et un filtre microporeux 21.

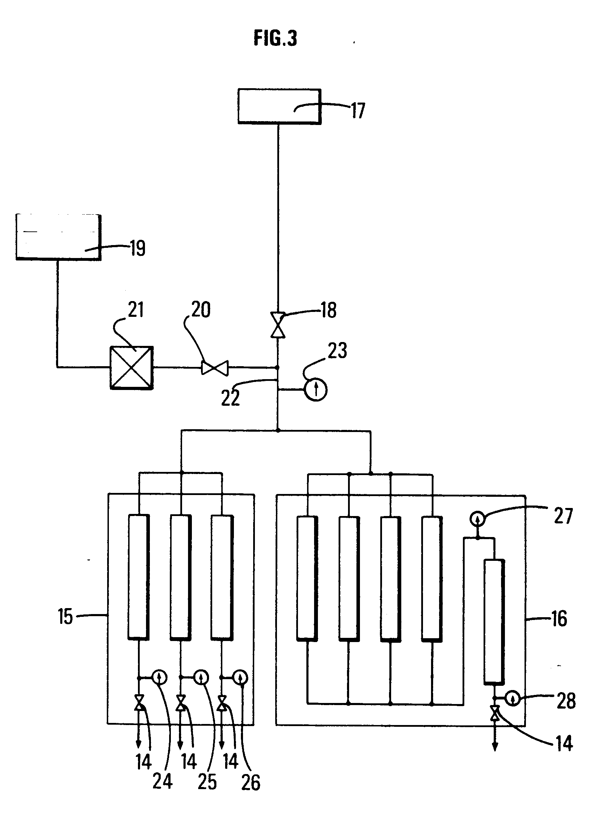

Les variations de perméabilité des échantillons en fonction du temps peuvent être suivies, par exemple en utilisant le dispositif représenté schématiquement par la figure 3 qui comprend le bac 19 contenant un fluide de référence et placé à un niveau suffisant au-dessus des éprouvettes pour exercer une charge hydrostatique. L'alimentation des éprouvettes est alors réalisée avec un fluide stérile à partir de la source 19, réservoir ou circuit, le fluide étant stérilisé par le filtre microporeux 21, le débit étant alors contrôlé sur le tuyau 22 par la vanne 20, la vanne 18 étant fermée.

Les variations de perméabilité des échantillons peuvent également être suivies par la mesure des pressions amont et aval à l'aide de prises manométriques 23, 24, 25, 26, 27 et 28 qui peuvent être conçues pour fonctionner soit en pression absolue, soit par des mesures relatives.

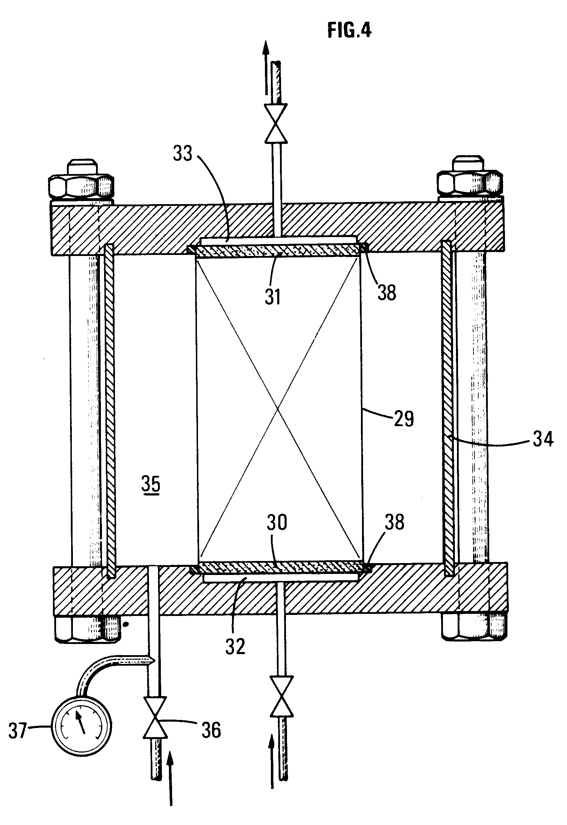

La figure 4 montre un mode avantageux de réalisation d'un porte-échantillon, reproduisant sensiblement les conditions de pression du milieu poreux.

Ce porte-échantillon comporte une gaine souple, étanche 29 fermée aux deux extrémités par deux obturateurs 30, 31 présentant des orifices 32, 33 pour le passage du fluide.

Le porte-échantillon est immergé dans une enceinte 34 contenant un fluide 35 maintenu par une vanne 36 à une pression réglable P contrôlée par un manomètre 37. L'enceinte 34 est équipée des presse-étoupes 38 pour isoler de la pression et du fluide 35 le passage des conduits raccordés aux orifices 32, 33.

De tels porte-échantillons peuvent être utilisés à la place de l'une au moins des éprouvettes de la figure 3.

Le dispositif présenté sur la figure 4 permet si on le souhaite de soumettre l'échantillon étudié à une contre-pression extérieure calculée pour reconstituer les conditions de pression auxquelles il est soumis dans son gisement naturel : le liquide 35 contenu dans l'enceinte 34 baigne la gaine souple étanche 29 qui entoure l'échantillon et lui communique la contre-pression contrôlée par le manomètre 37 et la vanne 36. Cette contre-pression est habituellement distincte de la pression nécessaire pour faire circuler le fluide par orifices 32, 33 sein de l'échantillon étudié.

La méthode selon l'invention est notamment applicable au diagnostic sur la durée de vie des forages ou puits en exploitation.

Elle est également applicable à la détermination de conditions limites de vitesse de circulation de fluide, et par conséquent, des conditions d'exploitation optimales (débit, diamètre de l'ouvrage, dimension des crépines) à adopter pour éviter ou retarder le colmatage de l'ouvrage projeté.

L'invention est également applicable pour proposer, à titre curatif, un changement du mode d'exploitation d'un réservoir risquant d'être colmaté.

**Revendications**

1. Méthode pour évaluer les risques de colmatage d'un puits ou d'un forage traversant un réservoir poreux, notamment une formation géologique, dans lequel on injecte ou on pompe un fluide, ladite méthode comportant une mesure de la perte de perméabilité en fonction du temps, caractérisée en ce qu'on fait s'écouler des débits contrôlés différents dudit fluide à travers une pluralité d'échantillons représentatifs du réservoir poreux qui sont alimentés en parallèle et dont on maintient la température sensiblement constante.

2. Méthode selon la revendication 1, caractérisée en ce qu'on fait s'écouler ledit fluide à des vitesses différentes à travers lesdits échantillons alimentés en parallèle.

3. Méthode selon la revendication 1, caractérisée en ce qu'on assure des différences de pression contrôlées entre l'entrée et la sortie de chacun des échantillons alimentés en parallèle.

4. Application de la méthode selon l'une des revendications 1, 2 et 3 au diagnostic sur la durée de vie des forages ou puits en exploitation.

5. Application de la méthode selon les revendications 1, 2 et 3 à la détermination de conditions limites de vitesse de circulation de fluide, et par conséquent, des conditions d'exploitation optimales en ce qui concerne le débit, le diamètre de l'ouvrage, les dimensions des crépines à adopter pour éviter ou retarder le colmatage de l'ouvrage projeté.

6. Application de la méthode selon l'une des revendications 1, 2 et 3 à la proposition, à titre curatif, d'un changement du mode d'exploitation d'un réservoir risquant d'être colmaté.

7. Dispositif pour évaluer les risques de colmatage d'un puits o d'un forage traversant une formation, notamment une formation géologique et parcouru par un fluide, par l'intermédiaire de moyens (23 à 28) pour suivre l'évolution de la perméabilité en fonction du temps caractérisé en ce qu'il comporte une pluralité d'éprouvettes (1, 11, 12) adaptées à contenir des échantillons représentatifs de la formation, des moyens (15, 16) pour maintenir sensiblement à la même température l'ensemble desdites éprouvettes, des moyens (17, 18 ou 19, 20, 21) pour alimenter en parallèle ces éprouvettes avec des débits contrôlés différents dudit fluide.

8. Dispositif selon la revendication 7, caractérisé en ce que l'une au moins desdites éprouvettes est constituée sous la forme d'un porte-échantillon comportant une gaine souple, étanche (29) fermée aux deux extrémités et permettant de placer l'échantillon dans les conditions de pression que règnent dans son gite naturel.

**Claims**

1. Method for assessing the risks of clogging affecting a well or a bore hole passing through a porous deposit, in particular, a geological formation, in which a fluid is injected or pumped, the said method comprising a measurement of the loss of permeability in terms of time, characterised in that different controlled amounts of the said fluid are caused to flow through a number of samples which are representative of the porous deposit and which are supplied in parallel, the temperature being maintained substantially constant.

2. Method in accordance with claim 1, characterised in that the said fluid is caused to flow at different speeds through the said samples supplied in parallel.

3. Method in accordance with claim 1, characterised in that controlled differences in pressure are applied between the inlet side and the outlet side of each sample supplied in parallel.

4. Application of the method in accordance with one of claims 1, 2 and 3 to a diagnosis of the service life of the bore holes or wells when in operation.

5. Application of the method in accordance with claims 1, 2 and 3 to the determination of the limiting flow rate conditions for the circulation of the fluid and, consequently, the operating conditions as regards the optimal flow rates; the diameter of the work and dimensions of the strainers to be adopted in order to prevent or delay clogging of the proposed work.

6. Application of the method in accordance with one of claims 1, 2 and 3, as a remedial method, to a proposed change in the method of operating a deposit which may be subject to clogging.

7. Device for assessing the risks of clogging affecting a well or a bore hole passing through a formation, in particular, a geological formation through which flows a fluid, by means of facilities (23 to 28) used to monitor developments in permeability in terms of time, characterised in that it comprises a number of sample holders (1, 11, 12) designed to contain samples which are representative of the formation, a means (15, 16) to maintain all the said sample holders substantially at the same temperature and a means (17, 18 or 19, 20, 21) to supply these sample holders in parallel with different controlled flow rates of the said fluid.

8. Device in accordance with claim 7, characterised in that at least one of the said sample holders is in the form of a holder comprising an impermeable flexible casing (29), closed at both ends and which permits the sample to be placed in accordance with the pressure conditions existing in its natural environment.

**Patentansprüche**

1. Verfahren zum Bewerten der Gefahren einer Verstopfung eines ein poröses Reservoir durchsetzenden Schachtes oder Bohrlochs, insbesondere einer geologischen Formation, in die man ein Fluid einspritzt oder einpumpt, wobei das Verfahren ein Messen des Permeabilitätsverlustes als Funktion der Zeit umfaßt, dadurch **gekennzeichnet,** daß man geregelte unterschiedliche Durchsätze dieses Fluids durch eine Vielzahl von Proben hindurchströmen läßt, welche repräsentativ für das poröse Reservoir sind und die parallel gespeist sind und deren Temperatur man im wesentlichen konstant hält.

2. Verfahren nach Anspruch 1, dadurch **gekennzeichnet,** daß man dieses Fluid bei unterschiedlichen Geschwindigkeiten quer durch diese parallel gespeisten Proben strömen läßt.

3. Verfahren nach Anspruch 1, dadurch **gekennzeichnet,** daß man für Druckunterschiede sorgt, die zwischen dem Eintritt und dem Austritt jeder der parallel gespeisten Proben geregelt werden.

4. Anwendung des Verfahrens nach einem der Ansprüche 1, 2 und 3 auf die Diagnostik bezüglich der Lebensdauer der in der Ausbeutung befindlichen Schächte oder Bohrlöcher.

5. Anwendung des Verfahrens nach einem der Ansprüche 1, 2 und 3 auf die Bestimmung der Grenzbedingungen der Fluidzirkulationsgeschwindigkeit und somit der optimalen Ausbeutungsbedingungen, was den Durchsatz, den Durchmesser des Bauwerks und die Abmessungen der auszulegenden Pumpenkörbe betrifft, um das Verstopfen des projektierten Bauwerks zu vermeiden oder zu verzögern.

6. Anwendung des Verfahrens nach einem der Ansprüche 1, 2 und 3 auf den Abhilfevorschlag einer Veränderung der Ausbeutungsweise eines Speichers oder Reservoirs, das Gefahr läuft, verstopft zu werden.

7. Vorrichtung zum Bewerten der Gefahren des Verstopfens eines Schachtes oder eines Bohrlochs, das eine Formation, insbesondere eine geologische Formation durchsetzt und von einem Fluid durchströmt wird, vermittels Mitteln (23 bis 28), die der Entwicklung der Permeabilität als Funktion der Zeit folgen, dadurch **gekennzeichnet,** daß sie eine Vielzahl von Proberöhrchen (1, 11, 12) umfaßt, die so ausgelegt sind, daß sie für die Formation repräsentative Proben enthalten, Mittel (15, 16), um im wesentlichen die Gesamtheit dieser Proberöhrchen auf der gleichen Temperatur zu halten, Mittel (17, 18 oder 19, 20, 21), um parallel diese Proberöhrchen mit unterschiedlichen Durchsätzen dieses Fluids zu speisen.

8. Vorrichtung nach Anspruch 7, dadurch **gekennzeichnet,** daß wenigstens eines dieser Proberöhrchen aufgebaut ist in Form eines Probenträgers mit einer nachgiebigen dichten Hülle (29), die an den beiden Enden geschlossen ist und es ermöglicht, die Probe unter die Druckbedingungen, die in ihrer natürlichen Lagerstätte herrschen, zu bringen.

**FIG.1**

4

2

8

6

11

1

**FIG 2**

10b

11

12

10

13

7

9

3

5

14

10a

# FIG.3

# FIG.4